# EUROPEAN PATENT SPECIFICATION

(11) **EP 2 882 301 B1**
(45) Date of publication and mention of the grant of the patent: **21.09.2016**
(21) Application number: 13748253.5
(22) Date of filing: 07.08.2013
(51) Int. Cl.: A23L 2/04, A23L 2/78, A23L 5/20, A23L 27/30

(54) **METHODS OF PRODUCING SWEET JUICE COMPOSITIONS**
VERFAHREN ZUR HERSTELLUNG VON SÜSSEN SAFTZUSAMMENSETZUNGEN
PROCÉDÉS DE PRODUCTION DE COMPOSITIONS DE JUS SUCRÉ

(30) Priority: 07.08.2012 US 201261680572 P
(43) Date of publication of application: 17.06.2015
(73) Proprietor: Guilin GFS Monk Fruit Corporation, Yanshan, Guilin Guangxi 541006 (CN)
(72) Inventor: LYNDON, Rex Murray, Paeroa 3674 (NZ)
(74) Representative: Huenges, Martin
(86) International application number: PCT/US2013/054007
(87) International publication number: WO 2014/025923

(56) References cited:
- EP-A1- 2 090 181
- WO-A1-2008/030121

## Description

### FIELD

The present disclosure relates generally to methods of preparing a sweet juice composition from terpene glycoside-containing fruit, and more specifically methods of preparing a sweet juice composition from monk fruit and other terpene glycoside-containing fruits of the Cucurbitaceae family using cation and anion exchange resins.

### BACKGROUND

With obesity on the rise in the Western world, consumers are constantly looking for ways to reduce the calorie content of their diet, but without sacrificing flavor. Many lower calorie food and beverage products have been developed. There are a number of low calorie products containing artificial non-nutritive sweeteners, such as saccharine, aspartame, cyclamate, dipeptides, trichlorosucrose and Acesulfame K. There is growing preference, however, for natural non-nutritive sweeteners, and many consumers prefer these to artificial sweeteners.

Certain naturally-occurring terpene glycosides are both intensely sweet and non-calorific. For these reasons, terpene glycosides are very attractive for use as a sweetening agent in the food, beverage and dietary supplement industries. The fruit of the Cucurbitaceae family is one source for naturally-occurring terpene glycosides. An example of such fruit is monk fruit, also known by its Chinese name luo han guo (*Siraitia grosvenorii,* formerly known as *Momordica grosvenorii*). Monk fruit is grown in the South East provinces of China, mainly in the Guangxi region. This fruit has been cultivated and used for hundreds of years as a traditional Chinese remedy for coughs and congestion of the lungs, and also as a sweetener and flavoring agent in soups and teas.

Monk fruit and some other fruits of the Cucurbitaceae family contain terpene glycosides, such as mogrosides and siamenosides, which are typically present at a level of around 1% in the fleshy part of the fruit. These terpene glycosides have been described and characterized in Matsumoto et al., Chem. Pharm. Bull., 38(7), 2030-2032 (1990). The most abundant mogroside in monk fruit is mogroside V, which has been estimated to have a sweetness of approximately 250 times cane sugar on a weight basis.

Monk fruit and other terpene glycoside-containing fruits of the Cucurbitaceae family, although sweet, are generally unsuitable for widespread use as a non-nutritive sweetener without additional processing. Raw fruit of the Cucurbitaceae family has a tendency to easily form off-flavors, and pectin in the fruit may cause gelling. The fruit can be preserved by drying, but this can cause the formation of other undesirable bitter, astringent and cooked flavors. Existing sweet juice compositions derived from monk fruit and other terpene glycoside-containing fruits of the Cucurbitaceae family suffer from the disadvantages of having a brown/yellow color, poor stability and noticeable undesirable flavors.

Various methods and techniques are currently known in the art to remove off-flavor components from the juice of monk fruit and other terpene glycoside-containing fruits of the Cucurbitaceae family; however, these methods also remove significant amounts of mogrosides from the juice. *See e.g.,* U.S. Patent No. 5,411,755; U.S. Patent Application Nos. 2009/0196966 and 2009/0311404; WO 2008/030121; EP 2090181. Thus, there exists a need in the art for commercially-viable methods of producing a sweet juice with a clean flavor from monk fruit and other terpene glycoside-containing fruits of the Cucurbitaceae family containing terpene glycosides.

### BRIEF SUMMARY

Provided herein are methods of producing a sweet juice composition that has a desirable flavor profile and is suitable for use as a food ingredient, including, for example, a sweet food ingredient. The invention is as defined in the claims.

In one aspect, provided is a method for producing a sweet juice composition, by contacting a juice obtained from fruit of the Cucurbitaceae family with an cation exchange resin and an anion exchange resin, either as separate resins or as a mixed bed of cation and anion exchange resins, to produce a sweet juice composition. The fruit has terpene glycosides, wherein at least one of the terpene glycosides is mogroside V. For example, the fruit of the Cucurbitaceae family may be monk fruit or other terpene glycoside-containing fruits. The juice obtained from fruit of the Cucurbitaceae family also has terpene glycosides, wherein at least one of the terpene glycosides is mogroside V. The juice may be a fruit juice, a juice concentrate, or a diluted juice. In one embodiment, the sweet juice composition produced from the method retains at least 60% on a dry weight basis, as determined by HPLC, of mogroside V from the juice.

In one variation, provided is a method for producing a sweet juice composition, by:
a) providing fruit of the Cucurbitaceae family, wherein the fruit has terpene glycosides, and wherein at least one of the terpene glycosides is mogroside V;
b) obtaining juice from the fruit, wherein the juice has terpene glycosides, and wherein at least one of the terpene glycosides is mogroside V;
c) providing a cation exchange resin and an anion exchange resin, wherein the cation exchange resin is regenerated in acid form, and wherein the anion exchange resin is regenerated in alkali form; and
d) contacting the juice with the cation exchange resin to produce a partially processed juice and contacting the partially processed juice with the anion exchange resin to produce a sweet juice composition, wherein the sweet juice composition retains at least 60% of the mogroside V from the juice as determined by HPLC.

In other embodiments, the juice and the sweet juice composition each have sugars naturally occurring in the fruit.

In some embodiments, step (b) includes:
i) contacting the fruit with water to form an aqueous slurry;
ii) processing the aqueous slurry at a temperature of at least about 60°C; and
iii) obtaining a juice from the aqueous slurry in step (ii).

In certain embodiments, the method further includes clarifying the juice before contact with the cation exchange resin and an anion exchange resin.

In one variation, step (d) includes: contacting the juice with the cation exchange resin to produce a partially processed juice; and contacting the partially processed juice with the anion exchange resin to produce a sweet juice composition.

In another variation, step (d) includes: contacting the juice with a mixed bed of cation and anion exchange resins.

In other embodiments, the method further includes: providing a second cation exchange resin and a second anion exchange resin, wherein the second cation exchange resin is regenerated in acid form, and wherein the second anion exchange resin is regenerated in alkali form; and contacting the sweet juice composition with the second cation exchange resin and the second anion exchange resin to produce a second sweet juice composition.

In another variation, provided is a method for producing a sweet juice composition, by:
a) providing juice from fruit of the Cucurbitaceae family, wherein the juice is a fresh juice or a diluted juice, wherein the juice has terpene glycosides from the fruit, and wherein at least one of the terpene glycosides is mogroside V;
b) providing a cation exchange resin and an anion exchange resin, wherein the cation exchange resin is regenerated in acid form, and wherein the anion exchange resin is regenerated in alkali form; and
c) contacting the juice with the cation exchange resin and the anion exchange resin to produce a sweet juice composition, wherein the sweet juice composition retains at least 60% of the mogroside V from the juice provided in step (a) as determined by HPLC.

In some embodiments, the juice provided in step (a) is a fresh juice, and the ratio of cation exchange resin to anion exchange resin is about 1 to 1. In other embodiments, the juice provided in step (a) is a diluted juice, and the ratio of cation exchange resin to anion exchange resin is about 1.4-2 to 1.

In some embodiments of any of the methods described above, the cation exchange resin is a strong acid cation exchange resin, a weak acid cation exchange resin, a mixed acid cation exchange resin, or any combinations thereof. In certain embodiments, the acid form is hydrogen form, ammonium form, or a combination thereof. In one embodiment, the cation exchange resin is a strong acid cation exchange resin regenerated in hydrogen form.

In some embodiments of any of the methods described above, the anion exchange resin is a weak base anion exchange resin, a strong base anion exchange resin, a mixed base anion exchange resin, or any combinations thereof. In certain embodiments, the alkali form is hydroxyl form, carbonate form, or a combination thereof. In one embodiment, the anion exchange resin is a weak base anion exchange resin regenerated in hydroxyl form.

In certain embodiments of any of the methods described above, the cation exchange resin and the anion exchange resin may indepenently include a polymer with a styrene backbone, wherein the styrene backbone is functionalized with acid moieties (cation exchange resin) or alkali moieties (anion exchange resin). In one embodiment, the acid moieties or alkali moieties cover, or at least partially cover, the styrene matrix, to minimize absorption of mogroside V by the styrene matrix and maximize removal of compounds that contribute to grassy or earthy flavors or odors and bitterness by ion exchange. In certain embodiments, the acid moieties or alkali moieties cover at least 50%, at least 60%, at least 70%, at least 80%, at least 90%, at least 91%, at least 92%, at least 93%, at least 94%, at least 95%, at least 96%, at least 97%, at least 98%, at least 99%, or at least 100% of the styrene matrix.

It is intended and understood that each and every variation of the cation exchange resin may be combined with the anion exchange resin in the methods described above, as if each and every combination is individually described. For example, in one variation, the cation exchange resin is a strong acid cation exchange resin regenerated in hydrogen form, and the anion exchange resin is a weak base anion exchange resin regenerated in hydroxyl form. In another variation, the cation exchange resin is a strong acid cation exchange resin regenerated in hydrogen form, and the anion exchange resin is a weak base anion exchange resin regenerated in carbonate form.

In other embodiments of any of the methods described above, the fruit is from the genus *Siraitia.* In one embodiment, the fruit is from *Siraitia grosvenorii* or *Siraitia siamensis.*

Provided is also a sweet juice composition produced by any of the methods described above. In one aspect, provided is a sweet juice composition produced by contacting a juice obtained from fruit of the Cucurbitaceae family with an cation exchange resin and an anion exchange resin to produce a sweet juice composition.

In certain embodiments, provided is a sweet juice composition produced by:
a) providing fruit of the Cucurbitaceae family, wherein the fruit has terpene glycosides, and wherein at least one of the terpene glycosides is mogroside V;
b) obtaining juice from the fruit, wherein the juice has terpene glycosides, and wherein at least one of the terpene glycosides is mogroside V;
c) providing a cation exchange resin and an anion exchange resin, wherein the cation exchange resin is regenerated in acid form, and wherein the anion exchange resin is regenerated in alkali form; and
d) contacting the juice with the cation exchange resin and the anion exchange resin to produce a sweet juice composition, wherein the sweet juice composition retains at least 60% of the mogroside V from the juice as determined by HPLC.

In other embodiments, provided is a sweet juice composition produced by:
a) providing juice from fruit of the Cucurbitaceae family, wherein the juice is a fresh juice or a diluted juice, wherein the juice has terpene glycosides from the fruit, and wherein at least one of the terpene glycosides is mogroside V;
b) providing a cation exchange resin and an anion exchange resin, wherein the cation exchange resin is regenerated in acid form, and wherein the anion exchange resin is regenerated in alkali form; and
c) contacting the juice with the cation exchange resin and the anion exchange resin to produce a sweet juice composition, wherein the sweet juice composition retains at least 60% of the mogroside V from the juice provided in step (a) as determined by HPLC.

Provided is also a food, beverage, dietary supplement or pharmaceutical product containing a sweet juice composition produced by any of the methods described above. Provided is also the use of a sweet juice composition produced by any of the methods described above in a food, beverage, dietary supplement or pharmaceutical product.

### DESCRIPTION OF THE FIGURES

The present application can be understood by reference to the following description taken in conjunction with the accompanying figures, in which like parts may be referred to by like numerals:
FIG. 1 depicts an exemplary process for purifying monk fruit juice using a series of strong acid cation (SAC) resins and weak base anion (WBA) resins, in the order of SAC → WBA → SAC → WBA; and
FIG. 2 depicts another exemplary process for purifying monk fruit juice using a mixed bed of SAC and WBA resins.

### DETAILED DESCRIPTION

The following description sets forth exemplary compositions, methods, parameters and the like. It should be recognized, however, that such description is not intended as a limitation on the scope of the present disclosure but is instead provided as a description of exemplary embodiments.

Provided herein are methods for producing a sweet juice composition from monk fruit and other terpene glycoside-containing fruits of the Cucurbitaceae family. In particular, the fruits contain at least one particular terpene-glycoside, mogroside V. The methods employ a combination of cation and anion exchange resins, either as separate resins or as a mixed bed of cation and anion exchange resins. The methods produce a sweet juice with a clean flavor, by removing at least a portion of the undesired flavors and odors, while maximizing the amount of certain terpene glycosides, in particular mogroside V, retained in the sweet juice composition after purification.

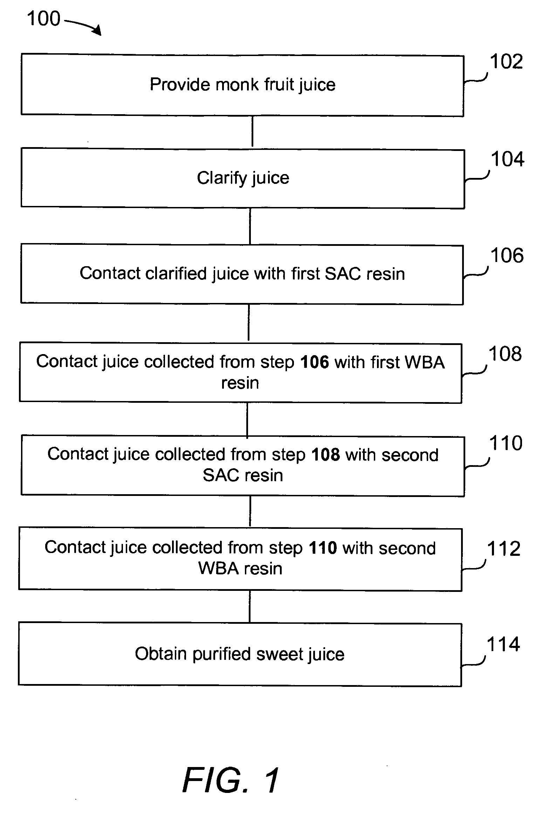

With reference to FIG. **1****,** method **100** is an exemplary embodiment for producing sweet juice from monk fruit using a series of cation exchange resins and anion exchange resins. In step **102,** monk fruit juice is provided. The juice may be fresh monk fruit juice or diluted juice obtained from a juice concentrate. In step **104,** the juice is clarified. The clarified juice is then contacted with a series of ion exchange resins, in the order of cation exchange resin (step **106),** anion exchange resin (step **107),** cation exchange resin (step **110)** and anion exchange resin (step **112)** to obtain a purified sweet juice with a clean flavor (step **114).** In this exemplary embodiment, a strong acid cation (SAC) resin is used as the cation exchange resin, and a weak base anion (WBA) is used as the anion exchange resin.

It should be understood that one or more steps may be added or omitted from method 100. For example, in some embodiments, the juice may be processed by contact with an adsorbent resins prior to contact with the ion exchange resins. In other embodiments, the juice collected from the second WBA resin may be collected and further processed, by contacting the juice with a third cation exchange resin and/or a third anion exchange resin. In other embodiments, however, the method may only involve contacting the clarified juice from step **104** with one set of cation and anion exchange resins, such that steps **110** and **112** are omitted.

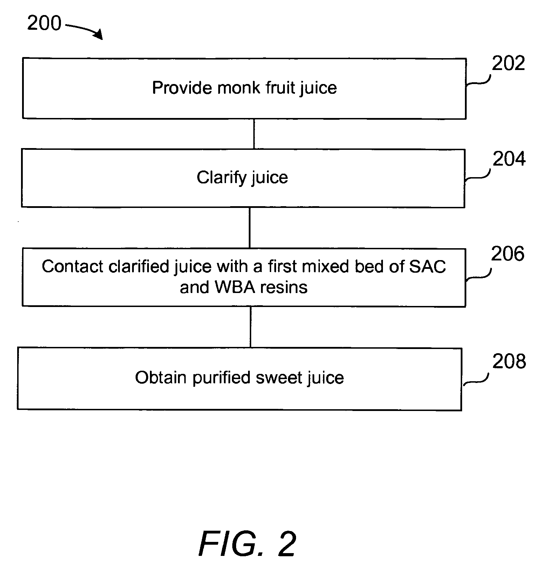

With reference to FIG. **2****,** method **200** is another exemplary embodiment for preparing sweet juice from monk fruit using a mixed bed of cation and anion exchange resins. In step **202,** monk fruit juice is provided. The juice may be fresh monk fruit juice or diluted juice obtained from a monk fruit juice concentrate. In step **204,** the juice is clarified. In step **206,** the clarified juice is contacted with a mixed bed of cation and anion exchange resins to obtain a purified sweet juice with a clean flavor (step **208**). Similar to method **100** described above, method **200** employs a SAC resin as the cation exchange resin, and a WBA as the anion exchange resin.

Exemplary methods **100** and **200** maximize the amount of sweet-tasting compounds (including, in particular, mogroside V, as well as other mogrosides such as mogroside IV, 11-oxo-mogroside V, mogroside VI, and siamenosides, such as siamenoside I) retained in the purified sweet juice, as well as the amount of compounds removed that contribute to grassy or earthy flavors or odors and bitterness. This results in a juice with a sweet, clean flavor. It should be understood that, in other exemplary embodiments, other resins may be used in combination with the cation and anion exchange resins.

The methods described herein employ various components (e.g., juice of monk fruit or other terpene glycoside-containing fruits of the Cucurbitaceae family, cation exchange resins, anion exchange resins) and process parameters to prepare a sweet juice with a clean flavor, each of which is described in further detail below.

### Juice from Monk Fruit or Other Terpene Glycoside-Containing Fruits

The juice provided for the methods described herein may be obtained from commercially available source or from monk fruit or other terpene glycoside-containing fruits using any methods known in the art. The juice to be purified according to the methods described herein contains one or more terpene glycosides. In certain embodiments, at least one of the terpene glycosides is a mogroside.

Mogrosides generally have varying number of glucose units, from 2 to 6, attached to carbon 3 and carbon 24 on a triterpene backbone. Mogrosides may include, for example, mogroside II, mogroside III, mogroside IV, mogroside V, mogroside VI, and any derivatives thereof. Mogroside II is the simplest mogroside, with one glucose residue attached to each of carbons 3 and 24. Mogroside III differs in having an additional glucose residue chained to carbon 24, while mogroside IV has 2-unit glucose side chains at both carbon 3 and 24. The progression continues through mogroside VI, which has 3 glucose residues attached at each of the two carbons at locations 3 and 24 of the triterpene backbone.

In other embodiments, the one or more terpene glycoside are selected from mogroside V, mogroside IV, 11-oxo-mogroside V, and mogroside VI. In a preferred embodiment, at least one of the terpene glycosides is mogroside V, which is also known as mogro-3-O-[β-D-glucopyranosyl (1-6)-β-D-glucopyranoside]-24-O-{[β-D-glucopyranosyl (1-2)]-[β-D-glucopyranosyl (1-6)]-β-D-glucopyranoside}.

In other embodiments, the juice to be purified may contain other terpene glycosides such as siamenosides. For example, in certain embodiments, in addition to mogroside V, one of the terpene glycosides is siamenoside I.

It should be understood that the amount of terpene glycosides present in the fresh juice may vary depending on the type of fruit used, as well as the method and conditions used to obtain juice from the fruit. It should also be understood that sugars present in the juice to be purified are naturally found in the fruit. In certain embodiments, the sugars naturally found in the fruit are simple sugars, including for example, monosaccharides and disaccharides. Such sugars naturally found in the fruit may include, for example, glucose, fructose, and sucrose.

Methods **100** and **200** depict exemplary embodiments for purifying juice obtained from monk fruit; however, it should be understood that, in other exemplary embodiments, juice from other fruits may be purified according to the methods described herein. The other fruits contain terpene glycosides, in particular mogroside V. For example, the fruits may be terpene glycoside-rich fruits, or mogroside V-rich fruits. Suitable fruits may be from a plant of the family Cucurbitaceae, and more specifically, from tribe Jollifieae, subtribe Thladianthinae, and more even specifically, genus Siraitia. For example, the fruit may be from a plant selected from *Siraitia grosvenorii, Siraitia siamensis, Siraitia silomaradjae, Siraitia sikkimensis, Siraitia africana, Siraitia borneensis,* and *Siraitia taiwaniana.*

Further, while the juice provided in methods **100** and **200** is fresh juice, it should be understood that the juice may also be a juice concentrate or a diluted juice.

### a) Fresh juice

"Fresh juice" refers to juice that has been obtained from fruit (e.g., using any methods and techniques known in the art, including the methods and techniques described below) that has not been concentrated by evaporation. One of skill would recognize the various methods and techniques known in the art to obtain juice from monk fruit and other terpene glycoside-containing fruits of the Cucurbitaceae family.

For example, in certain embodiments, a juice may be obtained from fresh fruit by first mechanically shredding or crushing the fruit. The shredded or crushed fruit may then be contacted with hot water to obtain juice from the fruit. The hot water may have a temperature sufficient to pasteurize the fruit and to inactivate endogenous enzymes (*e.g*., protease) present in the fruit. In certain embodiments, the temperature of the hot water may be at least about 60°C, at least about 70°C, or at least about 80°C. Inactivating the endogenous enzymes at this stage may have the beneficial effect of reducing enzymatic browning and limiting off-flavor formation caused by enzymatic action. The fruit and hot water may be mixed to ensure even contact between the fruit and the hot water, so that the enzymes are evenly exposed to the hot water and therefore denatured as quickly as possible.

In some embodiments, a continuous counter-current extraction process can be used to obtain juice from the shredded fruit, in which the shredded fruit is fed into the counter-current extractor and contacted with hot water. In one embodiment, the hot water has a temperature of about 80°C, about 90°C, or about 100°C. In another embodiment, the hot water is contacted with the shredded fruit for between about 30 minutes to about 60 minutes, or for about 30 minutes or for about 45 minutes. Counter-current extraction processes and apparatus are known in the art. *See, e.g.,* U.S. Patent No. 5,419,251. One advantage of using a counter-current extraction process is that the extraction times needed are typically less than if a conventional pot-type extraction process was used. Generally, the contact time between the fruit and the water in a counter-current extraction process is between about 30 and 60 minutes. Another advantage is that less water is usually needed. Typically, a ratio of water to fruit of about 1.5 to about 1 will suffice in a counter-current extraction process, whereas in a pot-type extraction a water-to-fruit ratio of about 3 to about 1 is generally required.

The juice may then be drained off the fruit and, in some embodiments, may be filtered or screened to remove large fruit pulp particles. The hot water extraction process may be repeated one or more times on the remaining fruit, and the juices obtained from each extraction may be combined. The juice obtained may then be cooled and clarified to provide clarity and prevent gelling of the juice.

Clarification may be carried out using any suitable methods known in the art, such as ultrafiltration. For example, an ultrafiltration membrane may be used, in which the ultrafiltration membrane has a molecular weight cut-off that allows for the passage of mogrosides in the permeate while retaining proteins and pectins in the retentate. In one embodiment, an ultrafiltration membrane of between 50,000 - 100,000 Daltons may be used. Alternatively, clarification may be carried out by treatment with phosphoric acid or with pectinase enzyme. Pectinase enzyme may be used in the form of a commercially available enzyme mixture containing pectinase enzyme, in order to lyse the pectin and precipitate pectin-stabilized peptides and protein from the juice. Suitable commercially available enzyme preparations may include, for example, Novozyme 3356 and Rohapect B1. Pectinase may be added as a dilute solution, in an amount of from about 0.001 % to about 1% on a dry weight basis. The juice with the pectinase may be gently agitated at a temperature of about 30°C to about 55°C, or about 40°C to about 50°C, until the juice is substantially free of pectin, typically for a period of about 15 minutes to about 60 minutes, or about 30 minutes.

In yet other embodiments, the juice may further be treated to deactivate the pectinase and to denature proteins improving coagulation and their co-precipitation with the degraded pectin, by heating to about 80°C to about 90°C, or about 85°C, for a time sufficient to deactivate the pectinase, which may in certain embodiments be between about 30 seconds and about 5 minutes. Following deactivation of the pectinase plus coagulation and co-precipitation of the protein, the juice may be cooled and filtered to remove flock and denatured protein. In one embodiment, the juice may be cooled to less than about 65°C, or in another embodiment, to less than about 50°C. The filtration may be carried out using any convenient method known in the art, such as through diatomaceous earth, or by cross-flow ultra- or micro-filtration. In one embodiment, the juice is filtered to optical clarity, for example, less than about 5 NTU.

### b) Juice Concentrate or Diluted Juice

Fresh juice obtained by the methods and techniques described above may be further processed to produce a juice concentrate. A "juice concentrate" has a soluble solids content greater than the fresh juice from which the juice concentrate is obtained. Juice concentrate may be stored for use at a later time. In one embodiment, the juice concentrate may be purified according to the methods described herein to produce a sweet juice with a clean flavor.

"Diluted juice" refers to a juice concentrate to which water is added. The amount of water added to a juice concentrate to produce the diluted juice in the methods described herein may vary. The amount of water added to the juice concentrate may be the same as, or more or less than, the amount of water removed from fresh juice to produce the juice concentrate. In another embodiment, diluted juice may also be purified according to the methods described herein to produce a sweet juice with a clean flavor. In certain embodiments, the diluted juice may have a concentration of about 1° Brix to about 30° Brix.

It should be understood that the juice obtained from a fruit of the Cucurbitaceae family may be further processed prior to contact with the ion exchange resins. For example, in some embodiments, the juice may be contacted with an adsorbent resin that may remove at least a portion of the terpene glycosides in the juice. Exemplary adsorbent resins that may be used include styrene divinylbenzene copolymer, or divinylbenzene copolymer resin. Such juice purified by adsorbent resins may still have at least a portion of the mogroside V and other terpene glycosides, and may then be further processed according to the methods described herein by contact with a combination of cationic and anionic resins. In other embodiments, the juice may be clarified before contact with the ion exchange resins.

### Ion Exchange Resins

The methods described herein utilize ion exchange resins to remove compounds that may contribute to grassy or earthy flavors or odors and bitterness from the juice obtained from a fruit of the Cucurbitaceae family, while maximizing the amount of certain terpene glycosides, in particular mogroside V, retained in the sweet juice composition. The use of a combination of anion and cation exchange resins and conditions described herein when processing monk fruit juice was surprisingly found to retain over 90% of mogroside V (by dry weight basis as determined by HPLC) in the juice, thereby retaining the intense sweetness of the monk fruit juice.

Ion exchange resins are polymers that are capable of exchanging particular ions within the polymer with ions in a solution that is passed through the resins. Ion exchange resins may be insoluble acids or bases, which have salts that are also insoluble, enabling the resins to exchange either positively charged ions (cation exchange resins) or negatively charged ions (anion exchange resins).

The ion exchange resins used in the methods described herein include cation exchange resins and anion exchange resins, used either as separate resins or as a mixed bed of cation and anion exchange resins. The ion exchange resins may, in certain embodiments, be synthetic ion exchange resins. Further, it should be understood that the ion exchange resins provided for the methods described herein may be obtained from any source, including any commercially available source.

### a) Cation exchange resins

The cation exchange resins used in the methods described herein may be a strong acid cation exchange resin, a weak acid cation exchange resin, a mixed acid cation exchange resin, or any combinations thereof.

The cation exchange resin used in the methods described herein is regenerated in acid form. In certain embodiments, the acid form is hydrogen form, ammonium form, or a combination thereof. In one embodiment, the cation exchange resin is a strong acid cation exchange resin regenerated in hydrogen form. For example, a suitable cation exchange resin is the Dowex Marathon MSC strong acid cation resin.

The cation exchange resin may be regenerated using suitable methods and techniques known in the art. For example, co-current regeneration, counter-current regeneration, or a combination thereof, may be employed. Co-current regeneration occurs when the direction of regenerant flow is the same as for processing the juice. For example, the regenerant can be pumped into a column through the dropper inlet directly onto the top of the resin bed, passes down the column and exits to drain through a valve. Counter-current regeneration occurs when the direction of regenerant flow is opposite to the juice flow. For example, the regenerant can be pumped into the base of a column, passes up the bed and exits through the dropper to drain.

A cation exchange resin can be returned to its reusable form by applying a strong mineral acid, such as hydrochloric acid or sulfuric acid, to displace cations exchanged from the previously decationized juice for hydrogen ions. Examples of such cations include potassium, sodium, calcium, magnesium, iron, amino acids and peptides.

### b) Anion exchange resins

The anion exchange resin used in the methods described herein may be a weak base anion exchange resin, a strong base anion exchange resin, a mixed base anion exchange resin, or any combinations thereof.

The anion exchange resin used in the methods described herein is regenerated in alkali form. In certain embodiments, the alkali form is hydroxyl form, carbonate form, or a combination thereof. In one embodiment, the anion exchange resin is a weak base anion exchange resin regenerated in hydroxyl form. For example, a suitable anion exchange resin is the Dowex Marathon WBA weak base anion resin.

An anion exchange resin may be regenerated using suitable methods known in the art. For example, the anion exchange resin can be returned to its reusable form using alkali, such as caustic soda, to neutralize and displace the acid anions exchanged from the previously deionized juice. Examples of such anions include chloride, sulfate, phosphate, ascorbate, citrate, malate and phenolic acids.

It is intended and understood that each and every variation of the anion exchange resin may be combined with the cation exchange resin in the methods described herein, as if each and every combination is individually described. For example, in certain embodiments, a strong acid cation exchange resin regenerated in hydrogen form may be used in combination with a weak base anion exchange resin regenerated in hydroxyl form in the methods described herein. In other embodiments, a strong acid cation exchange resin regenerated in ammonium form may be used in combination with a weak base anion exchange resin regenerated in hydroxyl form in the methods described herein. In yet other embodiments, a strong acid cation exchange resin regenerated in hydrogen form may be used in combination with a weak base anion exchange resin regenerated in carbonate form in the methods described herein.

### c) Selection of ion exchange resins

The use of both cation and anion exchange resins, either as separate resins or as a mixed bed of cation and anion exchange resins, in the methods described herein yield a sweet juice composition with a sweet, clean flavor. The presence of mogroside V in the juice contributes, in part, to the sweet flavor. Other sweet-tasting compounds include other mogrosides, such as mogroside IV, 11-oxo-mogroside V, and mogroside VI, and siamenosides, such as siamenoside I. The removal of bitter-tasting compounds, or at least a portion of the bitter-tasting compounds, contributes, in part, to the clean flavor. Clean flavor refers to the low level of objectionable organoleptic characteristics including grassy or earthy flavors or odors and bitterness. Various factors, including resin selection and processing conditions, can impact the flavor of the sweet juice composition produced according to the methods described herein.

To obtain sweet juice that has a clean flavor from monk fruit and other terpene glycoside-containing fruits of the Cucurbitaceae family, the combination of cation and anion exchange resins, either as separate resins or as a mixed bed of cation and anion exchange resins, used in the methods described herein minimize loss of terpene glycosides (including minimizing the loss of mogroside V), and maximize removal of certain compounds that may contribute to grassy or earthy flavors or odors and bitterness.

In some embodiments, the cation exchange resin used in the methods described herein has a low affinity for mogrosides, and in one embodiment, for mogroside V. In certain embodiments, the cation exchange resin used in the methods described herein retains less than 50%, less than 40%, less than 35%, less than 30%, less than 25%, less than 20%, less than 15%, less than 10%, less than 9%, less than 8%, less than 7%, less than 6%, less than 5%, less than 4%, less than 3%, less than 2%, less than 1%, less than 0.5%, or less than 0.1%, or between 60% and 100%, between 60% and 99%, between 60% and 95%, between 70% and 100%, between 70% and 99% between 70% and 95%, between 75% and 100%, between 75% and 99%, between 75% and 95%, between 80% and 100%, between 80% and 99%, between 80% and 95%, between 85% and 100%, between 85% and 99%, between 85% and 95%, between 85% and 90%, between 90% and 100%, or between 90% and 99% of mogrosides, and in one embodiment mogroside V, on a dry weight basis as determined by HPLC from the juice (before contact with the resin).

In some embodiments, the anion exchange resin used in the methods described herein has a low affinity for mogrosides, and in one embodiment, for mogroside V. In certain embodiments, the anion exchange resin used in the methods described herein retains less than 50%, less than 40%, less than 35%, less than 30%, less than 25%, less than 20%, less than 15%, less than 10%, less than 9%, less than 8%, less than 7%, less than 6%, less than 5%, less than 4%, less than 3%, less than 2%, less than 1%, less than 0.5%, or less than 0.1%, or between 60% and 100%, between 60% and 99%, between 60% and 95%, between 70% and 100%, between 70% and 99% between 70% and 95%, between 75% and 100%, between 75% and 99%, between 75% and 95%, between 80% and 100%, between 80% and 99%, between 80% and 95%, between 85% and 100%, between 85% and 99%, between 85% and 95%, between 85% and 90%, between 90% and 100%, or between 90% and 99% of mogrosides, and in one embodiment mogroside V, on a dry weight basis as determined by HPLC from the juice (before contact with the resin).

It should be understood that, in certain embodiments, both the cation exchange resin and the anion exchange resin, when used as separate resins in the methods described herein, independently have low affinity for mogrosides, and in one embodiment, for mogroside V. For example in certain embodiments, the cation exchange resin and the anion exchange resin used in the methods described herein independently retain less than 50%, less than 40%, less than 35%, less than 30%, less than 25%, less than 20%, less than 15%, less than 10%, less than 9%, less than 8%, less than 7%, less than 6%, less than 5%, less than 4%, less than 3%, less than 2%, less than 1%, less than 0.5%, or less than 0.1%, or between 60% and 100%, between 60% and 99%, between 60% and 95%, between 70% and 100%, between 70% and 99% between 70% and 95%, between 75% and 100%, between 75% and 99%, between 75% and 95%, between 80% and 100%, between 80% and 99%, between 80% and 95%, between 85% and 100%, between 85% and 99%, between 85% and 95%, between 85% and 90%, between 90% and 100%, or between 90% and 99% of mogrosides, and in one embodiment mogroside V, on a dry weight basis as determined by HPLC from the juice (before contact with the resin).

In yet other embodiments, the mixed bed of cation and anion exchange resins used in the methods described herein has a low affinity for mogroside V. In certain embodiments, the mixed bed of cation and anion exchange resins used in the methods described herein retains less than 50%, less than 40%, less than 35%, less than 30%, less than 25%, less than 20%, less than 15%, less than 10%, less than 9%, less than 8%, less than 7%, less than 6%, less than 5%, less than 4%, less than 3%, less than 2%, less than 1%, less than 0.5%, or less than 0.1%, or between 60% and 100%, between 60% and 99%, between 60% and 95%, between 70% and 100%, between 70% and 99% between 70% and 95%, between 75% and 100%, between 75% and 99%, between 75% and 95%, between 80% and 100%, between 80% and 99%, between 80% and 95%, between 85% and 100%, between 85% and 99%, between 85% and 95%, between 85% and 90%, between 90% and 100%, or between 90% and 99% of mogrosides, and in one embodiment mogroside V, on a dry weight basis as determined by HPLC from the juice (before contact with the resins).

### Mogroside V and other terpene glycosides content

In some embodiments, the cation and anion exchange resins contacted with the juice minimize loss of mogroside V in the juice purified according to the methods described herein. In certain embodiments, the use of the cation and anion exchange resins, either as separate resins or a mixed bed of cation and anion exchange resins, retains in the processed juice forming the sweet juice composition at least 60%, at least 65%, at least 70%, at least 75%, at least 80%, at least 85%, at least 90%, at least 95%, at least 96%, at least 97%, at least 98%, at least 99%, at least 99.5% or at least 99.9% of mogroside V on a dry weight basis as determined by HPLC, from the juice (before contact with the resins). In certain embodiments, the use of separate cation and anion exchange resins or a mixed bed of cation and anion exchange resins retains in the processed juice forming the sweet juice composition between 60% and 100%, between 60% and 99%, between 60% and 95%, between 70% and 100%, between 70% and 99% between 70% and 95%, between 75% and 100%, between 75% and 99%, between 75% and 95%, between 80% and 100%, between 80% and 99%, between 80% and 95%, between 85% and 100%, between 85% and 99%, between 85% and 95%, between 85% and 90%, between 90% and 100%, or between 90% and 99% of mogroside V on a dry weight basis as determined by HPLC, from the juice (before contact with the resins).

In certain embodiments, the methods described herein remove less than 50%, less than 40%, less than 35%, less than 30%, less than 25%, less than 20%, less than 15%, less than 10%, less than 9%, less than 8%, less than 7%, less than 6%, less than 5%, less than 4%, less than 3%, less than 2%, less than 1%, less than 0.5%, or less than 0.1 % of mogroside V on a dry weight basis as determined by HPLC, from the juice (before contact with the resins) to produce a sweet juice composition. In certain embodiments, the methods described herein remove between 1% and 40%, between 5% and 40%, between 10% and 40%, between 20% and 40%, between 30% and 40%, between 1% and 35%, between 5% and 35%, between 10% and 35%, between 20% and 35%, between 1% and 30%, between 5% and 30%, between 10% and 30%, between 10% and 20%, between 20% and 30%, between 1% and 20%, between 1% and 15%, between 1% and 10%, between 1% and 5%, or between 0.1% and 5% of mogroside V on a dry weight basis as determined by HPLC, from the juice (before contact with the resins) to produce a sweet juice composition.

In other embodiments, the cation exchange resin on its own, the use separate cation and anion exchange resins or a mixed bed of cation and anion exchange resins retains in the processed juice forming the sweet juice composition at least 60%, at least 70%, at least 80%, at least 85%, at least 90%, at least 95%, at least 96%, at least 97%, at least 98%, at least 99%, at least 99.5% or at least 99.9% of terpene glycosides on a dry weight basis as determined by HPLC, from the juice (before contact with the resins).. In certain embodiments, the use of separate cation and anion exchange resins or a mixed bed of cation and anion exchange resins retains in the processed juice forming the sweet juice composition between 60% and 100%, between 60% and 99%, between 60% and 95%, between 70% and 100%, between 70% and 99% between 70% and 95%, between 75% and 100%, between 75% and 99%, between 75% and 95%, between 80% and 100%, between 80% and 99%, between 80% and 95%, or between 85% and 90% of terpene glycosides on a dry weight basis as determined by HPLC, from the juice (before contact with the resins).

In certain embodiments, the methods described herein remove less than 20%, less than 15%, less than 10%, less than 9%, less than 8%, less than 7%, less than 6%, less than 5%, less than 4%, less than 3%, less than 2%, less than 1%, less than 0.5%, or less than 0.1% of terpene glycosides on a dry weight basis as determined by HPLC, from the juice (before contact with the resins) to produce a sweet juice composition. In certain embodiments, the methods described herein remove between 1% and 40%, between 5% and 40%, between 10% and 40%, between 20% and 40%, between 30% and 40%, between 1% and 35%, between 5% and 35%, between 10% and 35%, between 20% and 35%, between 1% and 30%, between 5% and 30%, between 10% and 30%, between 10% and 20%, or between 20% and 30% of terpene glycosides on a dry weight basis as determined by HPLC, from the juice (before contact with the resins) to produce a sweet juice composition.

The terpene glycosides retained in the sweet juice compositions produced according to the methods described herein may include, for example, mogrosides and siamenosides. In one variation, the terpene glycosides retained in the sweet juice composition include mogroside V, mogroside IV, 11-oxo-mogroside V, mogroside VI, and siamenoside I. In another variation, the terpene glycosides retained include mogroside V, and one or more of mogroside IV, 11-oxo-mogroside V, mogroside VI, and siamenoside I. It should be understood that the terpene glycoside content, including the mogroside V content, after purification may vary depending on numerous factors, including the composition of the juice, the type of ion exchange resins selected, and conditions under which the ion exchange resins are used.

One of skill in the art would recognize suitable analytical techniques that may be used to identify and quantify the amount of mogroside V and other terpene glycosides present in the juice and the sweet juice composition. For example, in one embodiment, high-performance liquid chromatography (also referred to as high-pressure liquid chromatography or HPLC) is a chromatographic technique that can be used for identifying, quantifying, and optionally purifying the individual terpene glycosides in the mixture.

Mogroside V content and terpene glycoside content may be expressed as a percentage on weight basis (% w/w). In one embodiment, mogroside V content and terpene glycoside content are expressed as a percentage on dry weight basis. "Dry weight basis" refers to the weight of the mogroside V or terpene glycoside content divided by the weight of dry soluble solids in a given sample. In other embodiments, mogroside V content and terpene glycoside content may be expressed in different units, such as percentage on wet weight basis or g/L. For example, one of skill in the art may measure mogroside V content and terpene glycoside content in a diluted juice sample using g/L, since volume of the juice can more easily be measured in a dilute sample. In contrast, one of skill in the art may measure mogroside V content and terpene glycoside content in a concentrated juice sample by weight. Further, one of skill in the art would be able to convert one unit to another.

### Compounds contributing to grassy or earthy flavors or odors and bitterness

In yet other embodiments, the resins used in the methods described herein remove, or at least partially remove, one or more compounds that contribute to grassy or earthy flavors or odors and bitterness. Such compounds may be selected from, for example, melanoidins, peptides, terpenoids, phenols (including, for example, polyphenols, phenolic oligomers, condensed polyphenols), and terpene glycosides (other than sweet-tasting terpene glycosides described above, including for example mogroside V, mogroside IV, 11-oxo-mogroside V, mogroside VI, and siamenoside I).

In one embodiment, the compound is a bitter-tasting melanoidin. In another embodiment, the compound is a bitter-tasting peptide. In yet another embodiment, the compound is a bitter-tasting terpenoid. In yet another embodiment, the compound is a bitter-tasting phenol. In yet another embodiment, the compound is a bitter-tasting polyphenol. In one embodiment, the compound is a bitter-tasting phenolic oligomer. In another embodiment, the compound is a bitter-tasting condensed polyphenol. In yet another embodiment, the compound is a bitter-tasting terpene glycoside (other than sweet-tasting terpene glycosides described above, including for example mogroside V, mogroside IV, 11-oxo-mogroside V, mogroside VI, and siamenoside I).

In certain embodiments, the methods described herein remove at least 5%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, at least 95%,at least 99%, or about 100% of one or more of the bitter-tasting compounds described above on a dry weight basis as determined by HPLC, from the juice (before contact with the resins) to produce the sweet juice composition.

The cation and anion exchange resins used in the methods described herein may be selected based on matrix coverage and/or spatial distribution of functional moieties. For instance, in one exemplary embodiment, the ion exchange resins is made up of a polymer with a styrene backbone, in which the styrene backbone is functionalized with acid moieties (cation exchange resin) or alkali moieties (anion exchange resin). In one embodiment, the acid moieties or alkali moieties cover, or at least partially cover, the styrene matrix, to minimize absorption of mogroside V by the styrene matrix and maximize removal of compounds that contribute to grassy or earthy flavors or odors and bitterness by ion exchange. In certain embodiments, the acid moieties or alkali moieties cover at least 50%, at least 60%, at least 70%, at least 80%, at least 90%, at least 91%, at least 92%, at least 93%, at least 94%, at least 95%, at least 96%, at least 97%, at least 98%, at least 99%, or at least 100% of the styrene matrix.

### Ion Exchange Purification Conditions

It should be further understood that, in addition to the use of a combination of cation and anion exchange resins, the ion exchange purification conditions may contribute to production of a sweet juice composition with a sweet, clean flavor while minimizing losses of desirable compounds such as mogrosides. Such processing conditions include, for example, flow rate.

"Flow rate" as used herein refers to the rate at which the juice flows through the columns expressed as bed volumes per hour. (bv/hr) In this instance "bed volume" refers to the volume occupied by the settled resin bed in the column based on the anion resin volume alone. The flow rate through a resin bed may impact the residence time of the juice in the column containing the ion exchange resin. Residence time of the juice may affect the amount of mogroside V and other terpene glycosides lost in the purification process, and thus, flow rate can impact on the amount of mogroside V and other terpene glycosides lost.

In some embodiments, the methods described herein is performed such that the juice is contacted with a cation exchange resin at an average flow rate of about 5 bv/hr. In other embodiments, the methods described herein is performed such that the juice is contacted with an anion exchange resin at an average flow rate of about 5 bv/hr. In yet other embodiments, the methods described herein is performed such that the juice is contacted with a mixed bed of cation and anion exchange resins at an average flow rate of about 5 bv/hr. It should also be understood that, in one variation, the flow rate throughout the purification process can be from about 2 bv/hr to about 30 bv/hr.

### The Sweet Juice Composition (After Ion Exchange Purification)

The sweet juice composition obtained after contact with both cation and anion exchange resins has a cleaner flavor than sweetener products currently known in the art that have been derived from monk fruit.

### Mogroside V and other terpene glycosides content

As discussed above, the ion exchange resins used in the methods described herein may minimize the loss of certain terpene glycosides, in particular mogroside V, from the purification process. The amount of certain terpene glycosides, in particular mogroside V, present in the sweet juice composition correlates with the sweetness of the sweet juice composition.

In some embodiments, the sweet juice composition produced according to the methods described herein has at least 0.1%, at least 0.5%, at least 1%, at least 2%, at least 3%, at least 4%, at least 5%, at least 10%, at least 15%, at least 20%, between 0.1% and 75%, between 1% and 65%, between 1% and 50%, between 1% and 40%, between 1% and 20%, between 1% and 10%, between 5% and 70%, between 5% and 50%, or between 5% and 20% of mogroside V on a dry weight basis as determined by HPLC.

In some embodiments, the sweet juice composition produced according to the methods described herein has at least 0.1%, at least 0.5%, at least 1%, at least 2%, at least 3%, at least 4%, at least 5%, at least 10%, at least 15%, at least 20%, between 0.1% and 75%, between 1% and 65%, between 1% and 50%, between 1% and 40%, between 1% and 20%, between 1% and 10%, between 5% and 70%, between 5% and 50%, or between 5% and 20% of terpene glycosides on a dry weight basis as determined by HPLC. As discussed above, the terpene glycosides retained in the sweet juice compositions after purification using ion exchange resins according to the methods described herein may include, for example, mogrosides and siamenosides. In one variation, the terpene glycosides retained in the sweet juice composition include mogroside V, mogroside IV, 11-oxo-mogroside V, mogroside VI, and siamenoside I. In another variation, the terpene glycosides retained include mogroside V, and one or more of mogroside IV, 11-oxo-mogroside V, and mogroside VI, and siamenoside I.

### Compounds contributing to grassy or earthy flavors or odors and bitterness

The cation and anion exchange resins used in the methods described herein remove, or at least partially remove, one or more compounds that contribute to grassy or earthy flavors or odors and bitterness. Such compounds may be selected from, for example, melanoidins, peptides, terpenoids, phenols (including, for example, polyphenols, phenolic oligomers, condensed polyphenols), and terpene glycosides (other than sweet-tasting terpene glycosides described above, including for example mogroside V, mogroside IV, 11-oxo-mogroside V, mogroside VI, and siamenoside I). The amount of such compounds present in the sweet juice composition correlates with the clean flavor of the sweet juice composition.

In one embodiment, the sweet juice composition produced according to the methods described herein has a low amount of bitter-tasting melanoidins. In another embodiment, the sweet juice composition has a low amount of bitter-tasting peptides. In yet another embodiment, the sweet juice composition has a low amount of bitter-tasting terpenoids. In yet another embodiment, the sweet juice composition has a low amount of bitter-tasting phenols. In yet another embodiment, the sweet juice composition has a low amount of bitter-tasting polyphenols. In one embodiment, the sweet juice composition has a low amount of bitter-tasting phenolic oligomers. In another embodiment, the sweet juice composition has a low amount of bitter-tasting condensed polyphenols. In yet another embodiment, the sweet juice composition has a low amount of bitter-tasting terpene glycosides.

The methods described herein may produce a sweet juice composition in which the amount of bitter-tasting compounds present in the composition is below threshold of taste perception. In certain embodiments, the sweet juice composition has less than 1000 ppm, less than 900 ppm, less than 800 ppm, less than 700 ppm, less than 600 ppm, less than 500 ppm, less than 400 ppm, less than 300 ppm, less than 200 ppm, less than 100 ppm, less than 90 ppm, less than 80 ppm , less than 70 ppm, less than 60 ppm, less than 50 ppm, less than 40 ppm, less than 30 ppm, less than 20 ppm, less than 10 ppm, less than 9 ppm, less than 8 ppm, less than 7 ppm, less than 6 ppm, less than 5 ppm, less than 5 ppm, less than 4 ppm, less than 3 ppm, less than 2 ppm, or less than 1 ppm of one or more of the bitter-tasting compounds described above, based on a 70° Brix concentrate of the sweet juice composition.

### Additional agents

While the sweet juice composition produced according to the methods described can generally be used without the need for adding other agents to cover or mask off-flavors and odors, the sweet juice compositions described herein may be combined with other materials, such as flavoring agents, coloring agents, and sweetening agents. Examples of flavoring agents include natural and artificial food flavors. Examples of coloring agents include natural and artificial food colorings. Examples of sweetening agents may include natural and artificial nutritive sweeteners, and natural and artificial non-nutritive sweeteners.

The sweet juice compositions described herein may be used in food, beverage, pharmaceutical or dietary supplement products.

It should be understood that reference to "about" a value or parameter herein includes (and describes) embodiments that are directed to that value or parameter per se. For example, description referring to "about x" includes description of "x" per se. In other instances, the term "about" when used in association with other measurements, or used to modify a value, a unit, a constant, or a range of values, refers to variations of +/- 10%.

It should also be understood that reference to "between" two values or parameters herein includes (and describes) embodiments that include those two values or parameters per se. For example, description referring to "between x and y" includes description of "x" and "y" per se.

### EXAMPLES

The following Examples are merely illustrative and are not meant to limit any aspects of the present disclosure in any way.

### Example 1

### Laboratory scale production and purification of diluted monk fruit juice

This Example describes the purification of diluted and clarified monk fruit juice. In this Example, diluted juice was obtained from a monk fruit juice concentrate that had been clarified and concentrated to about 70° Brix.

### Assembly of the ion exchange resins and apparatus

The ion exchange resins used in this Example were the Dowex Marathon MSC strong acid cation (SAC) resin and the Dowex Marathon WBA weak base anion (WBA) resin, both of which were commercially available in monodisperse bead grades.

Four rigid PVC columns were assembled, and 1200 mL of the selected and wetted resin loaded into each column to provide the processing order SAC → WBA → SAC → WBA. The SAC column was regenerated in hydrogen form, whereas the WBA column was regenerated in hydroxyl form. The SAC column was regenerated in counter-current mode. Once the bulk of the resin regenerant was rinsed out, as determined by conductivity, the columns were connected and cyclically rinsed down to acceptable water quality in preparation for the juice processing. In this Example, acceptable water quality had a pH < 10, and a conductivity < 20 µS/cm recorded to be exiting the second WBA column.

### Diluted juice obtained from juice concentrate

Monk fruit juice that had been clarified and concentrated to 70° Brix was diluted using reverse osmosis (RO) water. The resulting diluted juice was optically clear. As such, no further clarification was performed on the diluted juice. However, one of skill in the art would recognize that an additional filtration step may be employed if the juice concentrate was hazy. The characteristics of the diluted juice used in this Example are summarized in Table 1 below.

### Purification of the diluted juice using ion exchange resins

The regenerated and rinsed ion exchange columns were drained down to resin bed level, thus minimizing additional juice dilution by the head space water. The columns were maintained at or above bed level during subsequent processing. 10 L of the diluted and clarified monk fruit juice (equivalent to 8.3 bed volumes of juice based on the first anion resin volume) was pumped onto the first cation column at bed level to minimize resin disturbance, directed down through the resin, and then sequentially out and onto the next column at bed level in the order SAC → WBA → SAC → WBA.

Juice exiting the second WBA column was monitored using a refractometer calibrated in Brix. The "sweeten on volume" was discarded until the desired sweetness level was detected, after which the sweet juice was collected. The juice remaining in the columns after 10 L (8.3 bed volumes) of juice had been pumped onto the first cation column was thereafter displaced with water. The "sweeten off volume" was collected until the monitored Brix level decreased to the desired level after which collection ceased. "Sweeten on" refers to the delay in the detection of sweetness between the juice entering a resin column and exiting the column as the water in the resin is progressively displaced by the juice. Conversely, "sweeten off" refers to the delay between displacement water entering a resin column and the attenuation of the sweetness exiting the column as the sweet juice is displaced with water.

The characteristics of the sweet juice collected after the second anion exchange column *(i.e.,* after a second deionization step) are summarized in Table 1 below.

**Table 1. Summary of the juice composition characteristics**

| **Juice sample** | **Bed vol.** | **Soluble solids content (° Brix)** | **pH** | **Conductivity (µS/cm)** | **Titratable acidity (% w/w as citric acid)** | **Mogroside V (g/L)** | **Specific gravity** | **Mogroside V (% dry weight basis)** |
|---|---|---|---|---|---|---|---|---|
| Diluted juice | 8.3 | 12.0 | 4.4 | 6260 | 0.64 | 5.09 | 1.1 | 3.9% |
| Juice collected after second anion exchange resin | 8.8 | 6.9 | 9.2 | < 10 | nil | 4.50 | 1.02 | 6.4% |
| Re-established sweet juice concentrate | 0.64 | 72 | 4.4 | 30 | 0.03 | 60.1 | 1.3 | 6.4% |

The soluble solids content is a measure of the weight of dissolved solids as a percentage of the weight of a juice sample. Soluble solids content can be measured by refractometer, and may be expressed in units of ° Brix.

Conductivity is proportional to the concentration of inorganic and organic dissolved cations (including, for example, sodium, potassium, magnesium and calcium) and anions (including, for example, chloride, sulfate, phosphate, citrate and malate). Conductivity can be measured by any suitable methods or techniques known in the art, including, for example, using a conductivity meter. Conductivity may be expressed in units of µS/cm.

Titratable acidity is the measure of the combined free and un-dissociated acid hydrogen of a juice sample. Titratable acid may be measured using any suitable analytical techniques and methods known in the art. For instance, in this Example, a recorded volume of standardized sodium hydroxide (NaOH) solution was titrated into a weighed juice sample until the pH rose to 8.1, as measured by a pH meter. The amount of caustic consumed was expressed as the equivalent weight of anhydrous citric acid that would be neutralized by that amount of caustic. In Table 1, titratable acidity is expressed as % w/w (weight percent) equivalent as anhydrous citric acid, which corresponds to g citric acid / 100 g of sweet juice composition at the soluble solids concentration tabulated.

As discussed above, mogroside V content correlates with the sweetness of the juice. In this Example, mogroside V was measured using an HPLC equipped with UV-Vis detector. A 100 mg juice sample was obtained, and dissolved in 10 mL methanol under ultrasonic vibration for 2 minutes. The solution was then transferred to a 100 mL volumetric flask and diluted with methanol to 100 mL. The diluted solution was filtered through a 0.45µm micro-filter. A 20 mg standard sample for mogroside V was obtained and dissolved in 10 mL methanol under ultrasonic vibration for 2 minutes. The solution was then transferred to a 25 mL volumetric flask and diluted with methanol to 25 mL. The diluted standard solution was filtered through a 0.45µm micro-filter. To generate a standard curve, 2µL, 4µL, 6pL, 8µL and 10µL standard sample solutions were injected into the HPLC. Then, 10 µL of filtered sample solution was injected into the HPLC, and mogroside V content was calculated based on the standard curve.

Table 2 below summarizes several operating parameters from the process described in this Example.

**Table 2. Summary of operating parameters to color/taste breakthrough**

| Cation loading per cycle eq/L of first cation exchange resin | Anion loading per cycle eq/L of first anion exchange resin | Soluble solids collected per L of first anion exchange resin per cycle g solids/L anion | Soluble solids removed onto resins (%) | Retention of mogroside V in juice collected (%) |
|---|---|---|---|---|
| 1.0 | 1.87 | 627 | 40 | 94 |

The ion exchange process removes cations and anions that contribute to the soluble solids content as measured by a refractometer. With reference to Table 2 above, the percentage of soluble solids removed by the resins was calculated by subtracting the total soluble solids in the sweet juice collected to color/taste breakthrough, from the total soluble solids in the diluted juice, and dividing that remainder by the total solids in the diluted juice and then multiplying by 100. As used herein, "color/taste breakthrough" refers to the point in time when yellow or brown discoloration was first visually observed in the colorless juice exiting the second anion resin column, or when a bitter taste became perceivable in the juice exiting the second anion resin column, whichever occurred earliest.

With reference to Table 2 above, the percentage retention of mogroside V in the sweet juice was calculated by dividing the total mogroside V content collected in the sweet juice composite to color/taste breakthrough, by the total mogroside V component in the diluted juice and multiplying by 100. The retention of mogroside V was determined to be 94% on a dry weight basis as determined by HPLC.

Further observations made while accruing the data displayed in Table 2 above indicated that a ratio of first cation exchange resin to first anion exchange resin of about 1.7 to 1 was suitable for processing diluted juice obtained from a monk fruit juice concentrate.

### Re-establishing juice pH and concentration

The pH of the sweet juice collected was re-established to inhibit propagation of pathogenic micro-organisms and inhibit juice browning reactions prior to concentration. Specifically, the sweet juice collected was re-established to a pH below 5 by adding a few crystals of citric acid, thereby eliminating propagation of pathogenic micro-organisms and concurrently inhibiting juice browning reactions during evaporation. The pH-adjusted sweet juice was then evaporated to greater than 70° Brix to produce a microbiologically stable re-established monk fruit juice concentrate exhibiting minimal color and cooked flavor development.

The characteristics of the re-established monk juice fruit concentrate are summarized in Table 1 above. Additionally, the re-established monk fruit juice concentrate was observed to have a light straw color, with stable color and flavor during subsequent storage.

### Example 2

### Organoleptic evaluation of purified monk fruit juice from Example 1

A portion of the re-established monk fruit juice concentrate prepared in Example 1 was diluted in bottled mineral water to provide a mogroside V content of 250 mg/L. Concurrently, a sample of powder form monk fruit extract sweetener with a mogroside V purity of 50% was redissolved in the bottled mineral water. 2.7 g/L glucose was added to match the carbohydrate sweetness of the deionized juice preparation, providing a mogroside V content of 250 mg/L. In both preparations, the resulting pH was 6.8, reflecting the pH of the bottled water, and the acidity was negligible.

In a blind test, all subjects rated the taste of the sweet juice from Example 1 to be equivalent to or preferred over the powder form monk fruit extract sweetener.

### Example 3

### Laboratory scale production and purification of fresh monk fruit juice

This Example describes the preparation and purification of fresh monk fruit juice that has been clarified.

### Assembly of the ion exchange resins and apparatus

The same resins, equipment and configuration as previously described in Example 1 above were used to process the monk fruit juice in this Example. Following from use of the resins in Example 1 above, the performance of the cation resin had noticeably deteriorated due to the accumulation of melanoidins and other organic cations. To restore the capacities of the resins, the two SAC columns were reverse cycled with caustic soda solution, rinsed and double regenerated. The SAC column was regenerated in counter current mode to minimize chemical use. Once the bulk of the resin regenerant was rinsed out, as determined by conductivity, the columns were connected in the order SAC → WBA → SAC → WBA, and cyclically rinsed down to acceptable water quality in preparation for the juice processing. In this Example, acceptable water quality was considered to have a pH < 10, and a conductivity < 20 µS/cm recorded to be exiting the second WBA column.

### Fresh monk fruit juice

Fresh monk fruit was shredded, and then processed for 40 minutes in hot water using a counter-current extractor. The resulting juice was clarified before contact with the ion exchange resins in this Example. The characteristics of the fresh juice are summarized in Table 3 below.

### Purification of the fresh juice using ion exchange resins

The regenerated and rinsed ion exchange columns were drained down to resin bed level, minimizing further juice dilution resulting from mixing with the head space water. The resin bed level was maintained at or above bed level during subsequent processing. 30 L of the fresh juice (equivalent to 25 bed volumes of the juice based on the first anion resin volume) was pumped onto the first SAC column at bed level to minimize resin disturbance, directed down through the resin and sequentially out and onto the next column at bed level in the order SAC → WBA → SAC → WBA.

As described in Example 1 above, juice exiting the second WBA resin was collected based on the "sweeten on" and "sweeten off" effects, which was monitored by Brix level.

The characteristics of the sweet juice collected after the second anion exchange column *(i.e.,* after a second deionization step) are summarized in Table 3 below.

**Table 3. Summary of the juice composition characteristics at various stages in the process**

| **Juice sample** | **Bed vol.** | **Soluble solids content (° Brix)** | **pH** | **Conductivity (µS/cm)** | **Titratable acidity (% w/w as citric acid)** | **Mogroside V (g/L)** |
|---|---|---|---|---|---|---|
| Freshjuice | 25.0 | 3.1 | 5.5 | 2590 | 0.112 | 1.18 |
| Juice collected after second anion exchange resin | 28.7 | 2.0 | 5.8 | < 10 | 0.0005 | 1.01 |
| Re-established sweet juice concentrate | 0.57 | 74 | 4.4 | 50 | 0.05 | 65.5 |

Table 4 below summarizes several operating parameters from the process described in this Example.

**Table 4. Summary of operating parameters to color/taste breakthrough**

| Cation loading per cycle eq/L of first cation exchange resin | Anion loading per cycle eq/L of first anion exchange resin | Soluble solids collected per L of first anion exchange resin per cycle g solids/L anion | Soluble solids removed onto resins (%) | Retention of mogroside V in juice collected (%) |
|---|---|---|---|---|
| 0.78 | 1.23 | 575 | 26 | 98 |

With reference to Table 4 above, the percentage of soluble solids removed and the percentage of mogroside V retention was determined in accordance with the procedure described in Example 1 above. The retention of mogroside V was observed to be 98% on a dry weight basis as determined by HPLC.

Further observations made while accruing the data displayed in Table 4 above indicated that a ratio of first cation exchange resin to first anion exchange resin of about 1 to 1 was more suitable for processing fresh juice.

### Re-establishing juice pH and concentration

The pH of the sweet juice collected was re-established to below 5 by adding a few crystals of citric acid, thereby eliminating propagation of pathogenic micro-organisms and concurrently inhibiting juice browning reactions during evaporation. The pH-adjusted sweet juice was then evaporated to greater than 70° Brix to produce a microbiologically stable re-established monk fruit juice concentrate exhibiting minimal color and cooked flavor development.

The characteristics of the re-established monk fruit juice concentrate are summarized in Table 4 above. Additionally, the re-established concentrate was observed to have a light straw color, with stable color and flavor during subsequent storage.

### Example 4

### Organoleptic evaluation of purified monk fruit juice from Example 3

A portion of the re-established monk fruit juice concentrate prepared in Example 3 was diluted in bottled mineral water to provide a mogroside V content of 250 mg/L. A portion of the re-established monk fruit juice concentrate prepared in Example 1 was also diluted in bottled mineral water to provide a mogroside V content of 250 mg/L. Concurrently, a sample of powder form monk fruit extract sweetener with a mogroside V purity of 50% was redissolved in the bottled mineral water. In all three preparations, the resulting pH was 6.8, reflecting the pH of the bottled water, and the acidity was negligible.

In a blind test, all subjects rated the taste of the sweet juice in Example 3 (purified fresh monk fruit juice) to be cleaner and preferred over the powder form monk fruit extract sweetener product and sweet juice prepared in Example 1 above (purified monk fruit juice that had been obtained by diluting a monk fruit juice concentrate).

## Claims

1. A method for producing a sweet juice composition, comprising:
a) providing fruit of the Cucurbitaceae family, wherein the fruit comprises terpene glycosides, and wherein at least one of the terpene glycosides is mogroside V;
b) obtaining juice from the fruit, wherein the juice comprises terpene glycosides, and wherein at least one of the terpene glycosides is mogroside V;
c) providing a cation exchange resin and an anion exchange resin,
wherein the cation exchange resin is regenerated in acid form, and wherein the anion exchange resin is regenerated in alkali form;
d) contacting the juice with the cation exchange resin to produce a partially processed juice; and
e) contacting the partially processed juice with the anion exchange resin to produce a sweet juice composition,
wherein the sweet juice composition retains at least 60% of the mogroside V from the juice as determined by high-pressure liquid chromatography (HPLC).

2. The method of claim 1, wherein the sweet juice composition retains at least 60% of the terpene glycosides from the juice as determined by HPLC.

3. The method of any one of claims 1 to 2, wherein the juice and the sweet juice composition each have sugars naturally occurring in the fruit.

4. The method of any one of claims 1 to 3, wherein step (b) comprises:
i) contacting the fruit with water to form an aqueous slurry;
ii) processing the aqueous slurry at a temperature of at least 60°C; and
iii) obtaining juice from the aqueous slurry in step (ii).

5. The method of claim 4, further comprising clarifying the juice before contact with the cation exchange resin.

6. The method of any one of claims 1 to 5, further comprising:
providing a second cation exchange resin and a second anion exchange resin,
wherein the second cation exchange resin is regenerated in acid form, and wherein
the second anion exchange resin is regenerated in alkali form; and
contacting the sweet juice composition with the second cation exchange resin and the second anion exchange resin to produce a second sweet juice composition.

7. The method of any one of claims 1 to 6, wherein the cation exchange resin is selected from the group consisting of a strong acid cation exchange resin, a weak acid cation exchange resin, a mixed acid cation exchange resin, and any combinations thereof, wherein optionally the cation exchange resin is a strong acid cation exchange resin regenerated in hydrogen form.

8. The method of any one of claims 1 to 7, wherein the acid form is selected from the group consisting of hydrogen form, ammonium form, and a combination thereof, and/or wherein the alkali form is selected from the group consisting of hydroxyl form, carbonate form, and a combination thereof.

9. The method of any one of claims 1 to 8, wherein the anion exchange resin is selected from the group consisting of a weak base anion exchange resin, a strong base anion exchange resin, a mixed base anion exchange resin, and any combinations thereof, wherein optionally the anion exchange resin is a weak base anion exchange resin regenerated in hydroxyl form.

10. The method of any one of claims 1 to 9, wherein the cation exchange resin is regenerated in hydrogen form, and the anion exchange resin is regenerated in hydroxyl form.

11. The method of any one of claims 1 to 10, wherein the fruit is from *Siraitia grosvenorii* or *Siraitia siamensis.*

12. A method for producing a sweet juice composition, comprising:
a) providing juice from fruit of the Cucurbitaceae family, wherein the juice is a fresh juice or a diluted juice, wherein the juice comprises terpene glycosides from the fruit, and wherein at least one of the terpene glycosides is mogroside V;
b) providing a cation exchange resin and an anion exchange resin,
wherein the cation exchange resin is regenerated in acid form, and wherein the anion exchange resin is regenerated in alkali form; and
c) contacting the juice with the cation exchange resin to produce a partially processed juice; and
d) contacting the partially processed juice with the anion exchange resin to produce a sweet juice composition,
wherein the sweet juice composition retains at least 60% of the mogroside V from the juice as determined by high-pressure liquid chromatography (HPLC),
wherein optionally the juice provided in step (a) is:
a fresh juice, and wherein the ratio of cation exchange resin to anion exchange resin is about 1 to 1; or
a diluted juice, and wherein the ratio of cation exchange resin to anion exchange resin is about 1.4-2 to 1.

13. A sweet juice composition produced by a method according to any one of claims 1 to 12.

14. A food, beverage, pharmaceutical or dietary supplement product containing a sweet juice composition produced by a method according to any one of claims 1 to 12.

15. The use of a sweet juice composition produced by a method according to any one of claims 1 to 12 in a food, beverage, pharmaceutical or dietary supplement product.

## Patentansprüche

1. Verfahren zur Herstellung einer süßen Saftzusammensetzung, umfassend:
a) Bereitstellen der Frucht der Cucurbitaceae-Familie, worin die Frucht Terpenglykoside umfasst, und worin mindestens eines der Terpenglykoside Mogrosid V ist;
b) Gewinnen von Saft aus der Frucht, worin der Saft Terpenglykoside umfasst, und worin mindestens eines der Terpenglykoside Mogrosid V ist;
c) Bereitstellen eines Kationenaustauscherharzes und eines Anionenaustauscherharzes, worin das Kationenaustauscherharz in Säureform regeneriert wird, und worin das Anionenaustauscherharz in Alkaliform regeneriert wird;
d) Kontaktieren des Safts mit dem Kationenaustauscherharz, um einen teilweise verarbeiteten Saft herzustellen; und
e) Kontaktieren des teilweise verarbeiteten Safts mit dem Anionenaustauscherharz, um eine süße Saftzusammensetzung herzustellen,
worin die süße Saftzusammensetzung mindestens 60% des Mongrosid V aus dem Saft beibehält, wie durch Hochdruck-Flüssigkeitschromatographie (HPLC) bestimmt.

2. Verfahren nach Anspruch 1, worin die süße Saftzusammensetzung mindestens 60% der Terpenglykoside aus dem Saft beibehält, wie durch Hochdruck-Flüssigkeitschromatographie (HPLC) bestimmt.

3. Verfahren nach einem der Ansprüche 1 bis 2, worin der Saft und die süße Saftzusammensetzung jeweils in der Frucht natürlich vorkommende Zucker enthält.

4. Verfahren nach einem der Ansprüche 1 bis 3, worin Schritt (b) umfasst:
i) Kontaktieren der Frucht mit Wasser, um eine wässrige Aufschlämmung zu bilden;
ii) Verarbeiten der wässrigen Aufschlämmung bei einer Temperatur von mindestens 60°C; und
iii) Gewinnen von Saft aus der wässrigen Aufschlämmung aus Schritt (ii).

5. Verfahren nach Anspruch 4, weiterhin umfassend Klären des Safts vor dem Kontakt mit dem Kationenaustauscherharz.

6. Verfahren nach einem der Ansprüche 1 bis 5, weiterhin umfassend:
Bereitstellen eines zweiten Kationenaustauscherharzes und eines zweiten Anionenaustauscherharzes, worin das zweite Kationenaustauscherharz in Säureform regeneriert wird, und worin das zweite Anionenaustauscherharz in Alkaliform regeneriert wird; und
Kontaktieren der süßen Saftzusammensetzung mit dem zweiten Kationenaustauscherharz und dem zweiten Anionenaustauscherharz, um eine zweite süße Saftzusammensetzung herzustellen.

7. Verfahren nach einem der Ansprüche 1 bis 6, worin das Kationenaustauscherharz aus der Gruppe bestehend aus einem stark sauren Kationenaustauscherharz, einem schwach sauren Kationenaustauscherharz, einem gemischten sauren Kationenaustauscherharz, und jeglichen Kombinationen daraus ausgewählt ist, worin optional das Kationenaustauscherharz ein stark saures Kationenaustauscherharz, das in Wasserstoffform regeneriert wird, ist.

8. Verfahren nach einem der Ansprüche 1 bis 7, worin die Säureform aus der Gruppe bestehend aus Wasserstoffform, Ammoniumform und einer Kombination daraus ausgewählt ist, und/oder worin die Alkaliform aus der Gruppe bestehen aus Hydroxylform, Karbonatform und einer Kombination daraus ausgewählt ist.

9. Verfahren nach einem der Ansprüche 1 bis 8, worin das Anionenaustauscherharz aus der Gruppe bestehend aus einem schwach basischen Anionenaustauscherharz, einem stark basischen Anionenaustauscherharz, einem gemischten basischen Anionenaustauscherharz und jeglichen Kombinationen daraus ausgewählt ist, worin optional das Anionenaustauscherharz ein schwach basisches Anionenaustauscherharz, das in Hydroxylform regeneriert wird, ist.

10. Verfahren nach einem der Ansprüche 1 bis 9, worin das Kationenaustauscherharz in Wasserstoffform regeneriert wird, und das Anionenaustauscherharz in Hydroxylform regeneriert wird.

11. Verfahren nach einem der Ansprüche 1 bis 10, worin die Frucht aus *Siraitia grosvenorii* oder *Siraitia siamensis* ist.

12. Verfahren zur Herstellung einer süßen Saftzusammensetzung, umfassend:
a) Bereitstellen von Saft aus der Frucht der Cucurbitaceae-Familie, worin der Saft ein frischer Saft oder ein verdünnter Saft ist, worin der Saft Terpenglykoside aus der Frucht umfasst, und worin mindestens eines der Terpenglykoside Mogrosid V ist;
b) Bereitstellen eines Kationenaustauscherharzes und eines Anionenaustauscherharzes, worin das Kationenaustauscherharz in Säureform regeneriert wird, und worin das Anionenaustauscherharz in Alkaliform regeneriert wird; und
c) Kontaktieren des Safts mit dem Kationenaustauscherharz, um einen teilweise verarbeiteten Saft herzustellen; und
d) Kontaktieren des teilweise verarbeiteten Safts mit dem Anionenaustauscherharz, um eine süße Saftzusammensetzung herzustellen,
worin die süße Saftzusammensetzung mindestens 60% des Mogrosid V aus dem Saft beibehält, wie durch Hochdruck-Flüssigkeitschromatographie (HPLC) bestimmt,
worin optional der Saft, der in Schritt (a) bereitgestellt wird, ist:
ein frischer Saft, und worin das Verhältnis von Kationenaustauscherharz zu Anionenaustauscherharz etwa 1 zu 1 ist; oder
ein verdünnter Saft, und worin das Verhältnis von Kationenaustauscherharz zu Anionenaustauscherharz etwa 1,4-2 zu 1 ist.

13. Süße Saftzusammensetzung, hergestellt durch ein Verfahren nach einem der Ansprüche 1 bis 12.

14. Lebensmittel, Getränk, Arznei- oder Nahrungsergänzungsmittelprodukt, das eine süße Saftzusammensetzung, hergestellt durch ein Verfahren nach einem der Ansprüche 1 bis 12, enthält.

15. Verwendung einer süßen Saftzusammensetzung, hergestellt durch ein Verfahren nach einem der Ansprüche 1 bis 12, in einem Lebensmittel, Getränk, Arznei- oder Nahrungsergänzungsmittelprodukt.

## Revendications

1. Procédé de production d'une composition de jus sucré, comprenant :
a) la fourniture de fruit de la famille Cucurbitaceae, sachant que le fruit comprend des glycosides terpènes, et sachant qu'au moins un des glycosides terpènes est du mogroside V ;
b) l'obtention de jus à partir du fruit, sachant que le jus comprend des glycosides terpènes, et sachant qu'au moins un des glycosides terpènes est du mogroside V ;
c) la fourniture d'une résine d'échange de cations et d'une résine d'échange d'anions, sachant que la résine d'échange de cations est régénérée sous forme acide, et sachant que la résine d'échange d'anions est régénérée sous forme alcaline ;
d) la mise en contact du jus avec la résine d'échange de cations pour produire un jus partiellement traité ; et
e) la mise en contact du jus partiellement traité avec la résine d'échange d'anions pour produire une composition de jus sucré,
sachant que la composition de jus sucré garde au moins 60 % du mogroside V provenant du jus, tel que déterminé par chromatographie en phase liquide à haute pression (HPLC).

2. Le procédé de la revendication 1, sachant que la composition de jus sucré garde au moins 60 % des glycosides terpènes provenant du jus, tel que déterminé par HPLC.

3. Le procédé de l'une quelconque des revendications 1 à 2, sachant que le jus et la composition de jus sucré contiennent chacun des sucres naturellement présents dans le fruit.

4. Le procédé de l'une quelconque des revendications 1 à 3, sachant que l'étape (b) comprend :
i) la mise en contact du fruit avec de l'eau pour former une pâte aqueuse ;
ii) le traitement de la pâte aqueuse à une température d'au moins 60°C ; et
iii) l'obtention de jus à partir de la pâte aqueuse à l'étape (ii).

5. Le procédé de la revendication 4, comprenant en outre la clarification du jus avant contact avec la résine d'échange de cations.

6. Le procédé de l'une quelconque des revendications 1 à 5, comprenant en outre:
la fourniture d'une deuxième résine d'échange de cations et d'une deuxième résine d'échange d'anions, sachant que la deuxième résine d'échange de cations est régénérée sous forme acide, et sachant que la deuxième résine d'échange d'anions est régénérée sous forme alcaline ; et
la mise en contact de la composition de jus sucré avec la deuxième résine d'échange de cations et la deuxième résine d'échange d'anions pour produire une deuxième composition de jus sucré.

7. Le procédé de l'une quelconque des revendications 1 à 6, sachant que la résine d'échange de cations est sélectionnée dans le groupe constitué par une résine d'échange de cations à acide fort, une résine d'échange de cations à acide faible, une résine d'échange de cations à acide mixte, et toutes combinaisons de celles-ci, sachant que facultativement la résine d'échange de cations est une résine d'échange de cations à acide fort régénérée sous forme d'hydrogène.

8. Le procédé de l'une quelconque des revendications 1 à 7, sachant que la forme acide est sélectionnée dans le groupe constitué par une forme d'hydrogène, une forme d'ammonium, et une combinaison de celles-ci, et/ou sachant que la forme alcaline est sélectionnée dans le groupe constitué par une forme d'hydroxyle, une forme de carbonate, et une combinaison de celles-ci.

9. Le procédé de l'une quelconque des revendications 1 à 8, sachant que la résine d'échange d'anions est sélectionnée dans le groupe constitué par une résine d'échange d'anions à base faible, une résine d'échange d'anions à base forte, une résine d'échange d'anions à base mixte, et toutes combinaisons de celles-ci, sachant que facultativement la résine d'échange d'anions est une résine d'échange d'anions à base faible régénérée sous forme d'hydroxyle.

10. Le procédé de l'une quelconque des revendications 1 à 9, sachant que la résine d'échange de cations est régénérée sous forme d'hydrogène, et la résine d'échange d'anions est régénérée sous forme d'hydroxyle.

11. Le procédé de l'une quelconque des revendications 1 à 10, sachant que le fruit est issu de Siraitia grosvenorii ou Siraitia siamensis.

12. Procédé de production d'une composition de jus sucré, comprenant :
a) la fourniture de jus à partir de fruit de la famille Cucurbitaceae, sachant que le jus est un jus frais ou un jus dilué, sachant que le jus comprend des glycosides terpènes provenant du fruit, et sachant qu'au moins un des glycosides terpènes est du mogroside V ;
b) la fourniture d'une résine d'échange de cations et d'une résine d'échange d'anions, sachant que la résine d'échange de cations est régénérée sous forme acide, et sachant que la résine d'échange d'anions est régénérée sous forme alcaline ; et
c) la mise en contact du jus avec la résine d'échange de cations pour produire un jus partiellement traité ; et
d) la mise en contact du jus partiellement traité avec la résine d'échange d'anions pour produire une composition de jus sucré,
sachant que la composition de jus sucré garde au moins 60 % du mogroside V provenant du jus, tel que déterminé par chromatographie en phase liquide à haute pression (HPLC),
sachant que facultativement le jus fourni à l'étape (a) est :
un jus frais, et sachant que le rapport de résine d'échange de cations à résine d'échange d'anions est d'environ 1 à 1 ; ou
un jus dilué, et sachant que le rapport de résine d'échange de cations à résine d'échange d'anions est d'environ 1,4-2 à 1.

13. Composition de jus sucré produite par un procédé selon l'une quelconque des revendications 1 à 12.

14. Aliment, boisson, produit pharmaceutique ou complément alimentaire contenant une composition de jus sucré produite par un procédé selon l'une quelconque des revendications 1 à 12.

15. L'utilisation d'une composition de jus sucré produite par un procédé selon l'une quelconque des revendications 1 à 12 dans un aliment, une boisson, un produit pharmaceutique ou un complément alimentaire.
